Europäisches Patentamt

European Patent Office

Office européen des brevets

(11) Numéro de publication: **0 188 397**
**A2**

(12) ## DEMANDE DE BREVET EUROPEEN

(21) Numéro de dépôt: **86400063.3**

(22) Date de dépôt: **14.01.86**

(51) Int. Cl.⁴: **G 01 N 30/70**
**G 01 N 27/66**

(30) Priorité: **14.01.85 FR 8500423**

(43) Date de publication de la demande:
**23.07.86 Bulletin 86/30**

(84) Etats contractants désignés:
**DE FR GB IT NL**

(71) Demandeur: **GIRAVIONS DORAND, Société dite:**
**49 rue de Verdun**
**F-92150 Suresnes(FR)**

(72) Inventeur: **Mendes, Claude**
**Ectot l'Auber**
**F-76760 Yerville(FR)**

(74) Mandataire: **Thibon-Littaye, Annick**
**Cabinet A. THIBON-LITTAYE 11 rue de l'Etang**
**F-78160 Marly-le-Roi(FR)**

(54) **Procédé et dispositif d'analyse par un détecteur à capture d'électrons.**

(57) Dans l'utilisation d'un détecteur à capture d'électrons pour l'identification moléculaire de composés électrophiles, on rend reproductible la sensibilité du détecteur en asservissant la tension ou la fréquence des impulsions qu'on lui applique au maintien d'un courant de référence dont la valeur de consigne est élaborée automatiquement par le dispositif à partir de caractéristiques d'état du détecteur, préalablement déterminées, à savoir un courant de saturation CM et un courant spontané CS, selon une loi de proportionnalité entre ces deux courants.

De plus, la connaissance de ces caractéristiques d'état renseigne sur les anomalies physiques et physicochimiques du dospositif d'analyse ayant une influence sur la sensibilité du détecteur, et permet par conséquent d'y remédier.

FIG-1

EP 0 188 397 A2

L'invention concerne les procédés et dispositifs qui sont utilisés, par exemple dans l'analyse chromatographique en phase gazeuse, pour déceler la présence de molécules dans un gaz vecteur et en déterminer la quantité. Elle se rapporte plus précisément aux techniques dans lesquelles on utilise un détecteur à capture d'électrons comme organe sensible à la présence de telles molécules.

A titre d'exemple non limitatif d'application, l'analyse chromatographique d'un mélange en phase gazeuse consiste à introduire un échantillon vaporisé de ce mélange, au moyen d'un gaz vecteur, à l'intérieur d'un tube nommé "colonne", qui a pour caractéristique de séparer au fur et à mesure de leur progression les composants du mélange introduit, lesquels composants se présentent en sortie de colonne dans un ordre chronologique dépendant de leur nature moléculaire.

Le repérage et le dosage relatif de ces composants sont obtenus à la sortie de la colonne au moyen d'un détecteur sensible au passage des molécules ainsi séparées ou seulement de certaines d'entre elles.

Il existe de nombreux principes de détection de ces molécules, les détecteurs correspondants ayant chacun leur domaine d'application particulier et des caractéristiques qui leur sont propres. Le détecteur à capture d'électrons est basé sur la propriété qu'ont certaines molécules, dites électrophiles, de pouvoir capturer des électrons libres, la détection et la quantification électriques de cette capture renseignant sur la présence et la quantité de ces molécules. A cet effet, on applique une différence de potentiel entre le corps du détecteur et une électrode de mesure plongeant dans le flux gazeux à analyser , dans une cellule soumise à une source ionisante, afin de collecter les électrons libres présents, et on mesure le courant obtenu.

Quand un composé électrophile traverse le détecteur, il capture des électrons libres pour former des ions négatifs, la géométrie du détecteur étant optimisée pour que les électrons libres restant soient collectés et que les ions formés ne le soient pas, ou le soient moins. La diminution de la population d'électrons libres se traduit par une diminution du courant collecté, cette diminution pouvant être rattachée à la concentration des composés électrophiles présents dans le gaz vecteur.

Les électrons libres nécessaires à la détection sont obtenus, par exemple, au moyen d'une source faiblement radioactive (tritium ou nickel 63) ou par tout autre moyen connu de production de rayonnement bêta qui, bombardant les molécules du gaz vecteur, libère par collisions un plasma d'ions positifs, de radicaux et d'électrons libres de faible énergie, ces derniers étant destinés à la capture.

La différence de potentiel permettant la collecte des électrons libres et fournissant le signal de mesure peut être continue fixe ou continue variable asservie, ou bien pulsée à fréquence fixe ou pulsée à fréquence variable asservie, l'asservissement ayant à maintenir constant le courant collecté. Quand il n'y a pas d'asservissement, la mesure des variations du courant de capture caractérise quantitativement l'intensité de la capture d'électrons dans la chambre de détection, et par conséquent la présence plus ou moins importante de molécules électrophiles par rapport au gaz vecteur pur.

En fait, la plupart des détecteurs existants utilisent une alimentation pulsée à fréquence variable asservie, ceci pour des raisons de dynamique de la mesure. Le courant issu du détecteur est alors comparé à un courant de référence fixe, et la fréquence des impulsions est asservie en boucle fermée au maintien du courant collecté à la valeur de cette référence. C'est alors la mesure des variations résultantes de la fréquence ou de la tension analogique pilotant cette fréquence qui informe quantitativement de la présence des composés électrophiles traversant le détecteur.

Cependant, l'expérience montre qu'un système d'analyse idéal (absence totale de fuites, gaz vecteur strictement pur, colonne et détecteur parfaitement propres, produits injectés non polluants) n'existe pas et que les caractéristiques du détecteur peuvent évoluer en entraînant une dérive de la sensibilité.

La présente invention a pour but de rendre reproductible la sensibilité d'un détecteur à capture d'électrons alimenté en tension continue variable asservie ou en fréquence modulée asservie. Secondairement elle a aussi pour but de permettre de signaler et d'identifier des anomalies provenant du dispositif d'analyse et pouvant influencer le fonctionnement du détecteur (fuites, salissures, pureté du gaz vecteur, etc.).

Pour ce faire, l'invention a pour objet un procédé d'analyse pour un détecteur à capture d'électrons sensible à la présence d'un composé sous forme de molécules électrophiles dans un gaz vecteur, suivant lequel on effectue des mesures d'analyse, dans lesquelles on utilise comme signal de mesure les variations en tension ou en fréquence de la tension aux bornes du détecteur tandis que le courant est maintenu constamment égal à un courant de référence, caractérisé en ce que l'on effectue des mesures de référence sur le gaz vecteur pur, entre des mesures d'analyse différentes, en faisant varier le courant, pour déterminer un courant maximum CM qui n'est jamais dépassé et un courant spontané CS correspondant à un signal nul, on détermine une valeur de courant CR selon une loi de proportionalité, entre CS et CM, et l'on utilise cette valeur comme courant de référence pour les mesures d'analyse subséquentes.

On parvient ainsi à stabiliser la sensibilité du détecteur, indépendamment des autres caractéristiques, pour différentes séries de mesures.

L'invention permet aussi de détecter les anomalies de la source émettrice, de la nature et du débit du gaz vecteur, de la température et de l'état de pollution du détecteur, par les variations du courant maximum (ou courant limite de saturation) CM, les anomalies de l'état d'oxydation du détecteur par les variations du courant spontané CS, et les anomalies de propreté du gaz vecteur par les variations de la pente P de la courbe de variation de la tension ou de la fréquence appliquée au détecteur.

L'invention a également pour objet un dispositif d'analyse à détecteur à capture d'électrons sensible à la présence d'un composé dans un gaz vecteur, comportant une source d'alimentation électrique d'une électrode en contact avec ledit gaz dans une chambre exposée à des radiations ionisantes, des moyens pour faire varier la tension aux bornes de ladite chambre, en valeur ou en fréquence de manière à maintenir le courant constamment égal à un courant de référence pendant des mesures d'analyse et pour exploiter alors les variations de tension comme signal de mesure, caractérisé en ce qu'il comporte en outre des moyens pour observer par des mesures de référence effectuées sur le gaz vecteur, les variations de la tension en fonction d'un courant variable, pour déterminer ainsi un courant maximum CM, ou courant limite de saturation, et un courant spontané CS correspondant à un signal nul, et pour en déduire suivant une loi de proportionnalité une valeur de courant CR entre CM et CR et pour fixer à cette valeur le courant de référence.

Un tel dispositif comporte avantageusement des moyens automatiques programmés, pour commander des moyens de mesure de la tension ou de la fréquence du courant d'alimentation, des moyens de mesure du courant spontané CS du détecteur en valeur positive ou des moyens de mesures ou de calcul à tension ou fréquence nulle du courant spontané CS en valeur négative, des moyens de mesure du courant de saturation CM du détecteur, des moyens de mise en mémoire de mesures antérieures, des moyens de détermination de la valeur d'un courant de référence CR par calcul suivant la formule :

$$CR - CS = m (CM - CS)$$

où m est une constante comprise entre 0 et 1, et des moyens d'application de ce courant de référence CR à l'asservissement de la tension ou de la fréquence du courant d'alimentation pour des mesures ultérieures.

Dans un tel dispositif, les moyens de pilotage de la tension ou de la fréquence peuvent mettre en oeuvre une exploration incrémentale du courant jusqu'à la saturation, les moyens de mesure du courant maximum CM prenant, par exemple, comme valeur pour CM, celle du courant au dernier incrément avant saturation.

Un dispositif suivant l'invention peut comprendre des moyens d'établissement de la courbe des tensions ou des fréquences en fonction du courant, en l'absence de composés à analyser dans le gaz vecteur, et des moyens de déduction de la pente P de cette courbe.

Suivant l'invention, un dispositif permettant la détection des anomalies du système d'analyse, en particulier de la source émettrice, de la nature, de la propreté et du débit du gaz vecteur, de la température, de la pollution et de l'état d'oxydation du détecteur, est caractérisé en ce qu'il comprend des moyens d'affichage des valeurs du courant maximum CM, du courant spontané CS et éventuellement de la pente P de la courbe des variations de la tension ou de la fréquence du courant d'alimentation en fonction du courant, lors des mesures de référence.

A titre d'exemple, dans l'application de l'invention dans les analyses de chromatographie en phase gazeuse, les mesures de référence et le calcul du courant de référence à imposer sont effectués souvent, entre des chromatogrammes successifs au début de l'utilisation d'une installation récemment équipée ou modifiée. Quant on observe une certaine stabilité dans les valeurs de CM, CS et P, on peut espacer les mesures de référence entre les séries d'analyse. On les effectuera alors surtout, par exemple, en cas de changement de l'alimentation en gaz vecteur, en cas de modification de la température opératoire, après un refroidissement provisoire du détecteur, ou dans toute circonstance impliquant une modification des conditions de fonctionnement.

Eventuellement, le dispositif peut avantageusement être complété par des systèmes d'alarme, qui seront déclenchés notamment si la valeur de CM s'abaisse en dessous d'un seuil prédéterminé, si la valeur de CS varie de manière soudaine ou si elle devient positive, si la valeur de la pente P s'écarte d'une gamme prédéterminée.

Il est généralement avantageux qu'un dispositif suivant l'invention comprenne des moyens de déclenchement à la demande des moyens de mesure d'affichage et de calcul suivant un programme prédéterminé.

L'invention sera mieux comprise à la lecture de la description détaillée qui va suivre et à l'examen des dessins annexés qui montrent, à titre d'exemple non limitatif, un mode de réalisation de l'invention.

Sur ces dessins :

- la figure 1 représente schématiquement une installation d'analyse chromatographique en phase gazeuse avec détecteur à capture d'électrons ;

- la figure 2 est un diagramme représentant le signal obtenu (tension continue asservie ou fréquence asservie) en fonction du courant de consigne de cet asservissement ;

- la figure 3 est un schéma-bloc du dispositif d'asservissement de la fréquence du courant de mesure dans un système d'analyse à fréquence asservie suivant l'invention ;

- la figure 4 est un diagramme montrant les interprétations que l'on peut faire à partir de la mesure des courants CM et CS et de la pente P.

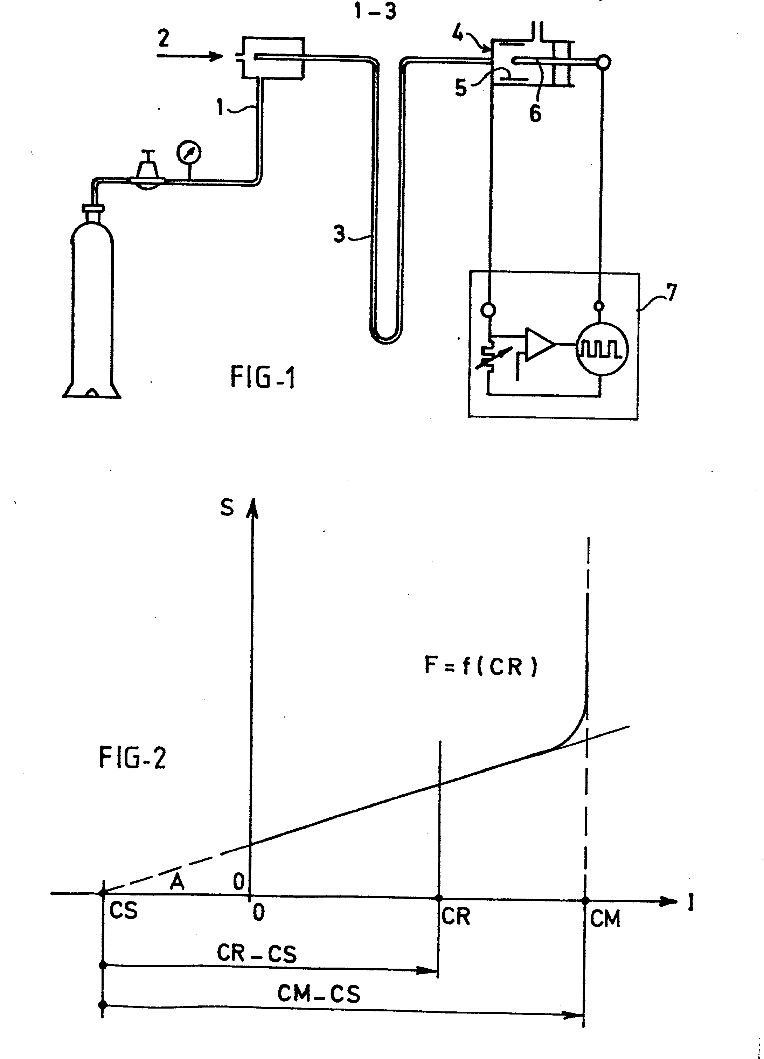

Dans le dispositif représenté sur la figure 1, le gaz vecteur est admis en 1, l'échantillon est admis et vaporisé en 2 pour traverser ensuite la "colonne" 3. Le détecteur 4 est installé à la sortie de la colonne, sa paroi interne a reçu la source radioactive 5 et une électrode centrale 6 permet de draîner un courant à partir d'un générateur à fréquence modulée 7 dont la fréquence est assujettie à maintenir le courant traversant à une valeur de référence préaffichée. On lit les évolutions de cette fréquence pour caractériser l'échantillon. Ce signal de mesure est enregistré sous forme de chromatogramme.

Sur le diagramme de la figure 2, on a tracé une courbe représentant les variations de la tension aux bornes du détecteur en fonction du courant appliqué quand on procède à des mesures préliminaires, ou mesures de référence, effectuées sur du gaz vecteur pur. On y voit apparaître le courant de saturation CM au-delà duquel toute mesure est impossible, et le courant spontané CS, courant positif ou négatif correspondant à une fréquence ou à une tension nulle qui, du moins s'il est négatif, résulte de l'extrapolation de la partie linéaire de la courbe définie par sa pente P = tg A hors de la zone de saturation. On a fait également figurer le courant limite de mesure au-delà duquel l'asservissement n'assure plus sa fonction.

La reproductibilité de la sensibilité est obtenue, selon l'invention et malgré les influences multiples des conditions d'analyse sur CM et CS, par la sélection d'un courant de référence CR ayant avec CM et CS la relation algrébrique :

$$CR - CS = m \ (CM - CS)$$

où m est une constante comprise entre 0 et 1, les conditions analytiques étant équivalentes par ailleurs.

Les limites pratiques de choix du coefficient m dépendent du matériel et du mode opératoire. En tout état de cause, on choisira m pour avoir un courant CR positif et suffisamment éloigné de la saturation et du courant spontané CS.

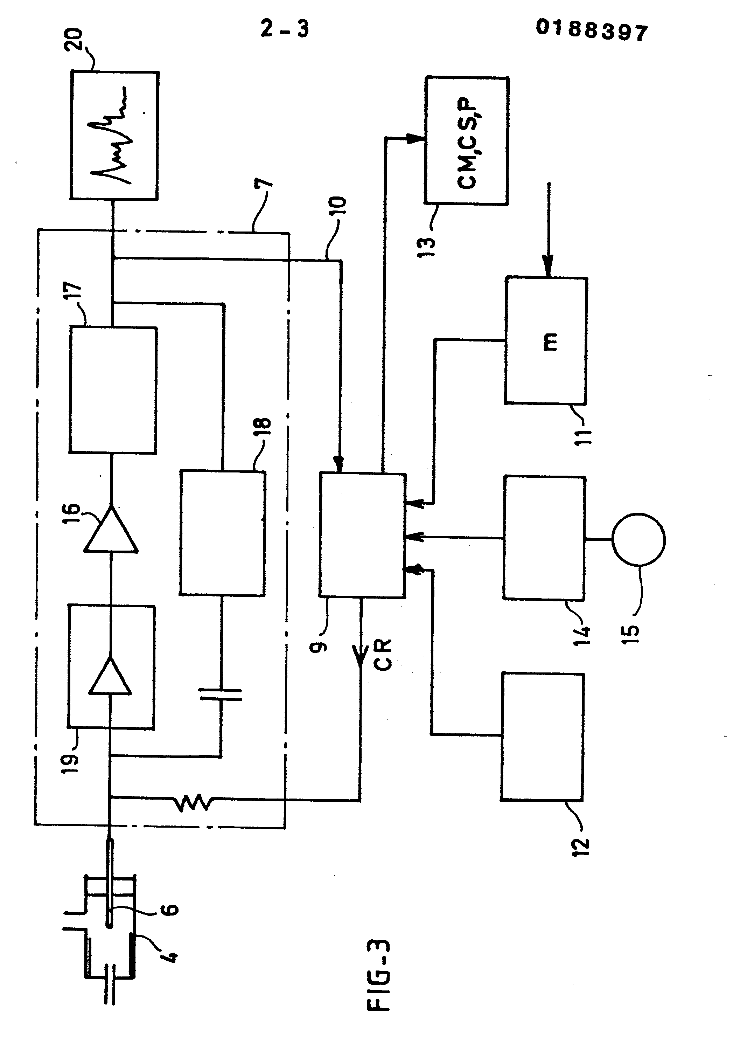

Sur le schéma de la figure 3, le détecteur 4 est alimenté par la source de courant pulsé 7 dont la fréquence est pilotée par l'asservissement du courant délivré à la valeur de consigne CR imposée depuis un microprocesseur 9.

On voit plus précisément que le signal de tension est traité par un comparateur 19, un amplificateur 16 et un convertisseur tension/fréquence 17 avant d'être enregistré en 20 sous forme d'un chromatogramme. La référence 18 montre un ensemble de mise en forme du signal d'asservissement.

La valeur CR résulte d'un calcul effectué par la cellule 9 à partir de la connaissance de la fréquence en 10 et du coefficient de proportionnalité m affiché en 11, l'incrémentation étant élaborée en 12; CR n'est donc pas une valeur affichée contrairement à ce qu'il est habituel de trouver sur les installations courantes.

Les valeurs CM, CS et P sont affichées en 13. Le programme 14 impose la succession de ces opérations à partir d'une commande d'initialisation 15 à la disposition de l'opérateur.

L'affichage, suivant l'invention, des grandeurs CM, CS et P permet aussi d'interpréter les valeurs anormales ou dérivantes qui renseignent sur la nature des anomalies physiques et physico-chimiques pouvant affecter le système d'analyse et provoquer des variations appréciables de la sensibilité du détecteur à capture d'électrons.

On a en effet constaté que :
- CM dépend de l'énergie des électrons émis dans la chambre de capture, de la nature et du débit du gaz vecteur, de la température et de l'état de pollution du détecteur, mais ne dépend que peu de la propreté du gaz vecteur.
- CS dépend principalement de l'état d'oxydation de la source émettrice du détecteur.
- P dépend de l'état de propreté du gaz vecteur.

Il est ainsi possible d'identifier les anomalies du système d'analyse en recoupant les mesures anormales ou dérivantes de CM, CS et P, et par conséquent d'y remédier.

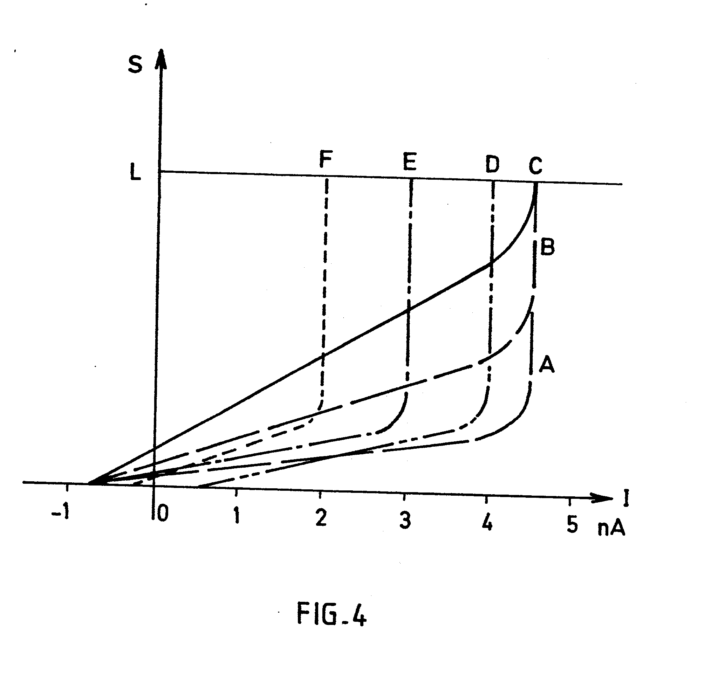

Sur le diagramme de la figure 4, on a fait figurer plusieurs exemples de courbes représentant le signal obtenu (tension asservie ou fréquence asservie) en fonction du courant appliqué, des valeurs numériques couramment

rencontrées ayant été choisies à titre d'exemple non limitatif pour les abcisses afin de mieux rendre compte de l'identification des anomalies. La courbe A caractérise un détecteur en bon état coopérant avec un système d'analyse propre et un gaz vecteur non pollué. Si ce gaz voit sa pollution augmenter légèrement, on obtiendra la courbe B, et la courbe C si cette pollution devient très importante. Par contre, si le gaz vecteur apporte des traces d'oxygène, on constate sur la courbe D une oxydation du détecteur par un passage de CS vers des valeurs positives qui peuvent être rendues fluctuantes par l'apport d'oxygène résultant d'une rétrodiffusion au niveau de fuites en amont. Si CM diminue selon la courbe E, il est vraisemblable que le gaz vecteur a entraîné des traces de polluants masquant l'activité de la source émettrice. CM diminuera encore si cette source voit son énergie interne baisser et on obtient la courbe F. L'expérience permet bien d'autres interprétations et il est clair que la mesure et l'affichage des caractéristiques CM, CS et P constitue un moyen privilégié de détection des anomalies du système d'analyse, et partant de leur correction.

Bien entendu, l'invention n'est nullement limitée au mode de réalisation décrit et représenté, elle est susceptible de nombreuses variantes accessibles à l'homme de l'art, suivant les applications envisagées et sans s'écarter pour cela du cadre de l'invention.

C'est ainsi que l'on pourrait mesurer ou calculer CM, CS et P par d'autres méthodes résultant de la définition de ces grandeurs selon la figure 2, par exemple en appliquant un balayage de courant explorant un domaine englobant toutes les courbes possibles et donnant une crête de tension ou de fréquence pour CM et une tension ou une fréquence nulle pour CS, ces investigations étant également pilotées à partir d'un programme séquentiel calculant ensuite CR et l'affichant.

L'ensemble des opérations est effectué automatiquement par des circuits appropriés internes au système, le résultat étant l'élaboration et l'exploitation de la mesure du courant de référence ainsi que l'affichage des valeurs CM, CS et P en vue du diagnostic des anomalies du système d'analyse.

0188397

REVENDICATIONS

1. Procédé d'analyse par un détecteur à capture d'électrons sensible à la présence d'un composé sous forme de molécules électrophiles dans un gaz vecteur suivant lequel on effectue des mesures d'analyse, dans lesquelles on utilise comme signal de mesure, les variations en tension ou en fréquence de la tension aux bornes du détecteur tandis que le courant est maintenu constamment égal à un courant de référence, caractérisé en ce que l'on effectue des mesures de référence sur le gaz vecteur pur, entre des mesures d'analyse différentes, en faisant varier le courant, pour déterminer un courant maximum CM qui n'est jamais dépassé et un courant spontané CS correspondant à un signal nul, on détermine une valeur de courant CR selon une loi de proportionnalité, entre CS et CM, et l'on utilise cette valeur comme courant de référence pour les mesures d'analyse subséquentes.

2. Dispositif d'analyse à détecteur à capture d'électrons sensible à la présence d'un composé dans un gaz vecteur, comportant une source d'alimentation électrique d'une électrode en contact avec ledit gaz dans une chambre exposée à des radiations ionisantes, des moyens pour faire varier la tension aux bornes de ladite chambre, en valeur ou en fréquence, de manière à maintenir le courant constamment égal à un courant de référence pendant des mesures d'analyse et pour exploiter alors les variations de tension comme signal de mesure, caractérisé en ce qu'il comporte en outre des moyens pour observer par des mesures de référence effectuées sur le gaz vecteur, les variations de la tension en fonction d'un courant variable, pour déterminer ainsi un courant maximum CM, ou courant limite de saturation, et un courant spontané CS correspondant à un signal nul, et pour en déduire suivant une loi de proportionnalité, une valeur de courant CR entre CM et CR et pour fixer à cette valeur le courant de référence.

3. Dispositif suivant la revendication 2, caractérisé en ce qu'il comporte des moyens automatiques programmés pour déterminer par mesure ou par calcul les valeurs de CM et CS et pour déterminer la valeur du courant de référence CR par calcul suivant la formule :

$$CR - CS = m (CM - CS)$$

où m est une constante, comprise entre O et 1, et des moyens d'application de ce courant de référence CR à l'asservissement de la tension ou de la fréquence du courant d'alimentation.

4. Dispositif suivant la revendication 2 ou 3, caractérisé en ce qu'il comporte des moyens de mesure de la fréquence qui mettent en oeuvre une exploration incrémental du courant jusqu'à la saturation, et en ce que les moyens de mesure du courant maximum CM prennent pour valeur de CM celle du courant au dernier incrément avant saturation.

5. Dispositif suivant l'une quelconque des revendications 2, 3 et 4, caractérisé en ce qu'il comprend des moyens d'établissement de la courbe de la tension ou de la fréquence en fonction du courant en l'absence de composés à analyser dans le gaz vecteur, et des moyens de déduction de la pente P de cette courbe.

6. Dispositif suivant l'une quelconque des revendications 2 à 5, caractérisé en ce qu'il comprend des moyens d'affichage des valeurs du courant maximum CM et du courant spontané CS lors desdites mesures de référence.

7. Dispositif suivant l'une quelconque des revendications 2 à 6, caractérisé en ce qu'il comporte des moyens d'affichage de la valeur et de la pente P de la courbe des variations de tension ou de fréquence du courant d'alimentation en fonction du courant lors desdites mesures de référence.

8. Dispositif suivant la revendication 7, caractérisé en ce qu'il comporte des moyens de déclenchement d'alarme en cas d'abaissement de la valeur de CM en dessous d'un seuil prédéterminé.

9. Dispositif suivant l'une quelconque des revendications 2 à 8, caractérisé en ce qu'il comporte des moyens de réglage manuel de coefficient de proportionnalité m.

10. Dispositif suivant l'une quelconque des revendications 2 à 5, caractérisé en ce qu'il comprend des moyens de déclenchement manuel ou automatique des moyens d'affichage et de calcul suivant un programme prédéterminé.

B 4033

0188397

FIG-1

FIG-2

FIG-3

2-3

B 4033

0188397

FIG.4